# EUROPEAN PATENT SPECIFICATION

(11) **EP 1 661 313 B1**
(45) Date of publication and mention of the grant of the patent: **04.02.2009**
(21) Application number: 04741711.8
(22) Date of filing: 02.06.2004
(51) Int. Cl.: H04L 12/28

(54) **METHOD AND APPARATUS FOR ENABLING ACCESS IN A WLAN ENVIRONMENT**
VERFAHREN UND VORRICHTUNG ZUR ERMÖGLICHUNG DES ZUGRIFFS IN EINER WLAN-UMGEBUNG
PROCEDE ET APPAREIL PERMETTANT DE VALIDER L'ACCES DANS UN ENVIRONNEMENT DE RESEAU LOCAL SANS FIL

(30) Priority: 29.08.2003 GB 0320301
(43) Date of publication of application: 31.05.2006
(73) Proprietor: MOTOROLA, INC., Schaumburg, IL 60196 (US)
(72) Inventor: JONES, Emma, Bradford-On-Avon Wiltshire BA15 2LB (GB)
(74) Representative: Jepsen, René Pihl
(86) International application number: PCT/EP2004/050998
(87) International publication number: WO 2005/022831

(56) References cited:
- US-A1- 2003 139 180
- ALA-LAURILA J ET AL: "WIRELESS LAN ACCESS NETWORK ARCHITECTURE FOR MOBILE OPERATORS" IEEE COMMUNICATIONS MAGAZINE, IEEE SERVICE CENTER. PISCATAWAY, N.J, US, vol. 39, no. 11, November 2001 (2001-11), pages 82-89, XP001107810 ISSN: 0163-6804
- RIGNEY C ET AL: "RFC2865: Remote Authentication Dial In User Service (RADIUS)" IETF, June 2000 (2000-06), XP002205199
- RIGNEY C: "RFC2866: RADIUS Accounting" IETF, June 2000 (2000-06), XP002205198

## Description

### Field of the Invention

The present invention relates to an apparatus and method for enabling access in a Wireless Local Area Network (WLAN) environment. In particular, but not exclusively, the present invention relates to allowing access to WLAN services in a manner that facilitates easy billing for the WLAN services.

### Background to the Invention

Increasingly, Wireless Local Area Networks (WLANs) are being deployed in addition to other wireless communication systems such as cellular communication systems like the Global System for Mobile Communications (GSM) or the proposed Universal Mobile Telecommunications System (UMTS). WLANs may be deployed covering only a limited area, such as an individual shop or a shopping complex, train or bus stations, office blocks, hotels, Libraries, educational establishments etc. and may be operated by the owner of the shop or hotel, for example, or may be operated by a third party. Such limited WLAN areas may be referred to as hot spot zones.

Generally, a WLAN is provided with one or more wireless access points via which wireless communication devices, such as a WLAN-enabled computer such as a lap top computer or a WLAN-enabled Personal Digital Assistant (PDA) or a WLAN-enabled cellular telephone or similar subscriber devices, which are within the coverage area, are able to gain access to the WLAN. The WLAN may in turn provide access to resources, such as the Internet or other communication or information networks, which are internal or external to the WLAN operator. Thus a user with a wireless communication device capable of accessing the WLAN is able to use the WLAN to access the Internet or other communication or information networks. One situation where this may advantageously occur is when a WLAN hot spot zone is provided in a café, to enable a wireless internet café. Thus for example, a user may take a WLAN-enabled lap top to the wireless internet café to pick up emails or to access the Internet.

Billing for the provision of the WLAN services can be a problem for WLAN hot spot zone providers, since the setting up and maintenance of a billing system for the WLAN can add significantly to the costs of setting up the WLAN.. Current billing techniques involve managing WLAN hot spots at a central location, in a similar manner to cellular systems, and billing is carries out at the central location. However, current approaches do not allow someone to buy a WLAN hot spot and bill for it locally, other than by setting up a local billing system. Thus, current approaches do not allow the WLAN provider flexibility to determine the tariff structure and control their charges.

Examples of WLANs are described in United States Patent Application US 2003/0139180 which describes a cellular network with a public network interface and a wireless local area network extension and in "Ala-Laurila et al: "Wireless LAN Access Network Architecture for Mobile Operators" IEEE Communications, vol. 39 no.11, Nov. 2001, p. 82-89, XP001107810, ISSN: 0163-6804 which describes a wireless broadband local area network utilizing a SIM-based subscriber management function.

There is a need to alleviate the disadvantages of the prior art. In particular there is a need to provide a simpler means for a WLAN provider to provide access to WLAN services without requiring a large investment in a dedicated WLAN billing system.

According to a first aspect of the invention there is provided a method for enabling access to a WLAN communication system in accordance with claim 1. According to a second aspect of the invention, there is provided an apparatus for enabling access to a WLAN communication system in accordance with claim 11. In accordance with the invention, billing for WLAN services provided to a WLAN communication device can be achieved using a charging call via another communication system.

The term "WLAN communication device" is intended to mean any WLAN-enabled device, in particular both dedicated WLAN devices, and also devices that are able to access other communication systems, for example a dual mode WLAN/cellular device. Examples of such devices are a WLAN-enabled computer such as a lap top computer or a WLAN-enabled Personal Digital Assistant (PDA) or a WLAN-enabled cellular telephone or similar subscriber devices.

A charging call is any type of call in which a proportion of the cost of the call, i.e. the revenue generated by the call, is allocated to an entity other than a provider of the communication resources for the call. An example of a charging call is a premium rate number call.

Preferably, the WLAN system forwards a subscriber information request or subscriber authentication request received from the other communication system to the WLAN enabled communication device, and forwards subscriber information or subscriber authentication information from the WLAN-enabled communication device to the other communication system.

### Brief Description of the Drawings

For a better understanding of the present invention, and to show how it may be brought into effect, reference will now be made, by way of example, to the accompanying drawings, in which:
Figure 1 illustrates a WLAN network in which the present invention may be implemented; and
Figure 2 shows communications between a WLAN user equipment, a WLAN controller and an additional communication system in accordance with one embodiment of the invention.

### Description of a Preferred Embodiment

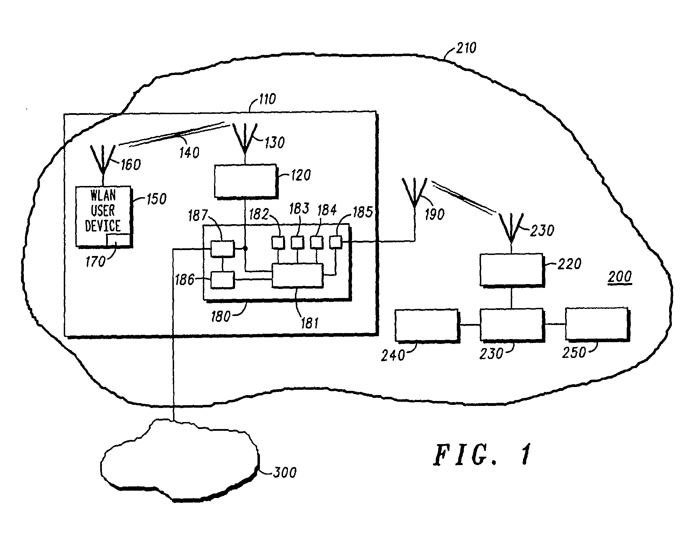

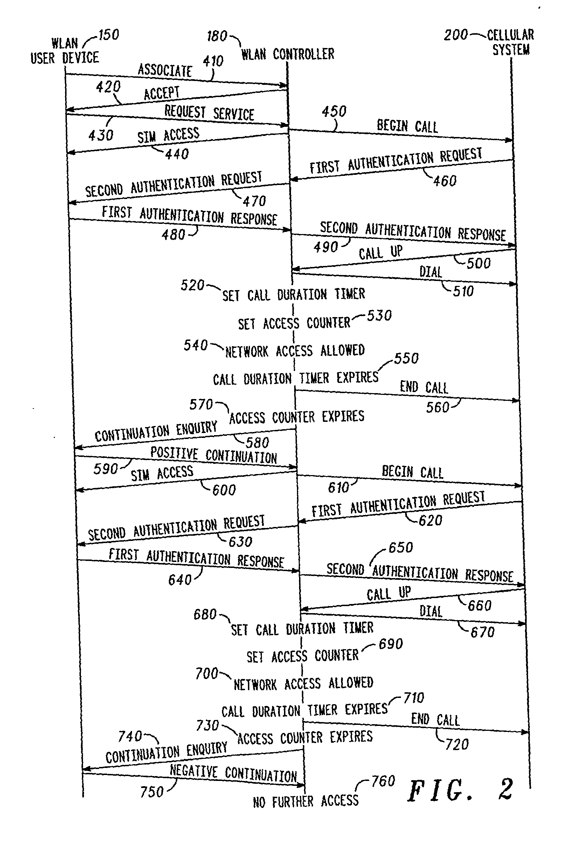

An embodiment will now be explained with reference to Figures 1 and 2.

Figure 1 shows a WLAN system 100 and part of a cellular communication system 200. The WLAN system provides WLAN coverage over a WLAN coverage area 110. The WLAN coverage area 110 substantially overlaps with at least one cell 210 of the cellular communication system 200. However, it will be clear to a skilled person that the degree of overlap is not important to the invention.

The WLAN system 100 is provided with one or more WLAN access points 120, having an antenna 130 enabling wireless communication via WLAN communication link 140 with WLAN-enabled communication devices 150, having a WLAN antenna 160, within the WLAN coverage area 110.

The WLAN-enabled communication device also has a subscriber module 170. In the illustrated embodiment the subscriber module 170 is a Subscriber Identity Module card (SIM card) containing subscription information for the cellular communication system 200. However, this is not necessary in all embodiments: all that is required is that the subscriber module 170 contains subscription information that can be processed by another communication system, in this case the cellular communication system, irrespective of whether the subscription information entitles the user to communication services from the other communication system i.e. the cellular communication system in the illustrated embodiment.

In Figure 1, only one WLAN access point 120 and one WLAN-enabled communication device 150 is shown, for clarity. However, it will be apparent that generally a WLAN system 100 may have a number of WLAN access points 120 and will provide service to a number of WLAN-enabled communication devices 150 within the WLAN coverage area 110.

The WLAN system 100 also has a WLAN controller 180 coupled to the WLAN access point 120 for controlling access to WLAN system services by the WLAN-enabled communication devices and for arranging for billing for the WLAN system services provided to the WLAN-enabled communication devices.

Although both the access control function and the billing function are carried out in the WLAN controller 180 in the illustrated embodiment, for simplicity, it will be apparent that these functions can be carried out by separate dedicated apparatus, and/or either or both functions can be integrated with the WLAN access point or any other WLAN infrastructure element, and the precise arrangement or location of these functions is a matter of design choice for a skilled person. However, as will be apparent, the access control function and the billing function are closely related and however arranged these functions should be enabled to interact as described below.

The WLAN controller 180 of the illustrated embodiment is also connected to an antenna 190, for providing access to the cellular communication system 200, as will be explained later. The antenna 190 may be positioned such that a good connection to the cellular communication system 200 can be achieved. If possible, the WLAN access point antenna 130 may also serve as antenna 190: alternatively the antenna may be positioned outside the coverage area of the WLAN system 100, for example outside a shopping center where the WLAN system 100 covers a shop within the shopping center.

The WLAN controller 180 is also coupled to a network 300. Network 300 is preferably a communication and/or information network such as the Internet 300 in the illustrated embodiment.

Although the WLAN system 100 in the illustrated embodiment is connected to an external network, such as the Internet 300, it is not necessary for the network 300 to be external to the WLAN system. As one example, a Library may provide a wireless LAN system in accordance with the present invention to provide access to a Library information network. In addition, for example, a school or University Faculty or accommodation block might provide a WLAN to provide access to a school, Faculty or general University information network 300.

The WLAN controller 180 is provided with a billing controller 181; call duration timer 182; access counter 183; calling number selector 184 and communication system interface 185 to carry out the billing function; and network access controller 186 and a WLAN/network interface 187 to carry out the access control function. Not all these different elements are necessary in all embodiments, as will be clear from the following description. In addition one or more of the elements shown separately may be combined depending on choices of the skilled person.

The communications system interface 185 comprises a transceiver and associated modulators/demodulators and other elements necessary for communication with the cellular communication base station 220. Since such elements will be known to a skilled person, a detailed implementation of communication system interface 185 will not be explained in further detail herein.

The communications system interface 181 acts under the control of billing controller 181. Billing controller 181 is also coupled to call duration timer 182, access counter 183 and calling number selector 184. Billing controller 181 is coupled to the WLAN access point 120 to receive messages from and to send messages to the WLAN communication device 150. Billing controller 181 is also coupled to the information network access controller 186 to control access by the WLAN user device 150 to the communication network 300. The WLAN/network interface 187 is coupled between the WLAN network 100 and the network 300 and comprises switches and/or other coupling arrangements to allow the WLAN user device 150 access to the network 300 under the control of the network access controller 186.

The function and operation of these different modules within the WLAN controller 180 will be explained in more detail with reference to Figure 2.

Figure 1 also shows a conventional cellular communication system 200 in outline. The detailed construction and operation of the cellular communication system is not relevant to the invention and will be known to a skilled person and so only parts relevant to the present invention will be explained.

In the illustrated embodiment, as indicated above, WLAN system 100 falls substantially within cell 210 of the cellular communication system 200. Base station 220 of cell 210 is provided with an antenna 230 and provides communication services to wireless communication devices within the coverage area of cell 210. The base station 220 is coupled to the rest of the cellular network 230 for routing calls for wireless communication devices within cell 210 to and from another communication device attached to the cellular network (not shown for clarity) or an external circuit switched or packet network 240. The cellular communication system 200 is also provided with subscriber authentication and billing systems 250. The detailed arrangement of the cellular system 200 and particularly the authentication and billing arrangements for the cellular system are not relevant to the invention and, as they will be known to a skilled person, these arrangements will not be described further herein.

As will be known to a skilled person, generally in cellular communication systems, the user device holds subscriber information, for example in a Subscriber Identification Module (SIM card) in the GSM and other systems, used to authenticate access to the cellular communication network and to allow for billing of the subscriber for communication services provided. During operation of the cellular communication system, when the base station 220 receives a call request from a user device in the coverage area of the cell 210, an authentication request is sent to the user device. The user device responds to the authentication request using the subscriber information held in the SIM card and once the response has been authenticated to determine that the SIM card subscriber is entitled to service, the requested call is set up in accordance with the cellular communication system protocols. The billing system is notified of the call and adds the cost of the call to the subscriber bill (or subtracts the cost of the call from the pre-paid value, for pre-pay systems). It should be noted that the billing computer and the authentication server are generally co-located.

The operation of the illustrated embodiment, which allows access to WLAN services in a manner that enables billing of WLAN services without requiring a separate WLAN billing system, will now be explained with reference to Figure 2.

Figure 2 illustrates schematically the interactions between the WLAN user device 150, the WLAN system 100 and a cellular communication system 200 during a WLAN access set up during operation of the illustrated embodiment. The internal operation of the cellular communication system 200 is not illustrated, since this operation is conventional and will be known to a skilled person. In addition the illustrated signaling between the WLAN system 100 and the cellular communication system 200 is illustrated in outline and in principle only: the skilled person will be able to adapt the illustrated signaling to the other communication system as necessary.

Firstly, when the WLAN user device 150 detects the presence of the WLAN network and/or at power on of the WLAN user device 150 in the WLAN coverage area 110, the WLAN user device 150 sends an associate message 410 to the WLAN access point 120 and the WLAN access point 120 sends an accept message 420 back to the WLAN user device 150 over the WLAN communication link 140. This exchange of messages creates an association of the WLAN user device 150 with the WLAN network 100, and is conventional.

Then when the user wishes to access the WLAN 100, for example to download information from the internet 300, the WLAN user device 150 sends a request service message 430 to the WLAN controller 180. The request service message 430 is received by the billing controller 181. In response, the billing controller 181 sends a SIM access request message 440 back to the WLAN user device 150 and also initiates a call using the cellular communication system by sending a standard access request message, referred to in Figure 2 as begin call message 450, to the base station 220 using the communication system interface 185. Clearly, although the SIM access request message 440 is shown as being sent before the begin call message 450, in practice these messages are likely to be sent substantially simultaneously and the precise order is immaterial.

In accordance with the standard cellular communication system protocol, a first authentication request message 460 is sent from the cellular system 200 and is received by the billing controller 181 via the communication system interface 185. In response the billing controller 181 sends a second authentication request message 470 to the WLAN user device 150. Typically the data or content portion of the first authentication request message 460 and the second authentication request message 470 will be the same, so that the subscriber module 170 of the WLAN user device 150 can respond to the authentication request 470 as if it had received the first authentication request message 460: however, the modulation and other wireless transmission parameters used for the first authentication request message 460 and the second authentication request message 470 will be adapted to the cellular communication system 200 and the WLAN 100 respectively, and will therefore be different.

On receipt of the second authentication request message 470, the subscriber information module 170 generates an authentication response, which the WLAN user device 150 sends to the WLAN controller 180 as a first authentication response message 480. The billing controller 181 of the WLAN controller 180 receives the first authentication response message 480 and in response the billing controller 181 sends a second authentication response message 490 to the base station 220 via the communication system interface 185. Once again, typically the data or content portion of the first authentication response message 480 and the second authentication response message 490 will be the same, so that the base station 220 can respond to the second authentication response message 490 as if it had been received directly from a user device having the subscriber module 170: however, the modulation and other wireless transmission parameters used for the first authentication response message 480 and the second authentication response message 490 will be adapted to the WLAN 100 and the cellular communication system 200 respectively, and will therefore be different. In addition, it should be noted that the speed of response must be kept sufficiently short to avoid timeout of the authentication process by the cellular system 200.

Once the subscriber information in the subscriber module 170 has been authenticated by the cellular communication system 200, the base station 200 sends a call up message 500 to the WLAN controller 180. The call up message 500 is received by the billing controller 181 via the communication system interface 185, and the billing controller 181 then causes the communications system interface 185 to set up a call to a designated number by sending a dial message 510 to the base station 220.

In the simplest embodiment the same designated number is used for all such calls. In other embodiments, the number to be called is selected from a plurality of numbers stored by the calling number selector 184. This will be explained in more detail below.

The cellular communication system call is a charging call, ie is a call to a number that enables a proportion of the cost of the call as billed to the user via the subscriber information held in subscriber module 170 to be allocated to a party other than the provider of the communication system resource. In this case, the WLAN operator is the third party. An example of such a number is a premium rate number such as used in the UK.

Once the call has been set up 510, the billing controller 181 sets the call duration timer 182 in step 520 and also sets the access counter 183 in step 530. in addition, the billing controller 181 also instructs network access controller 186 to allow the WLAN user device access to the network 300 via the WLAN/network interface 187, step 540. Again, these steps are intended to occur substantially simultaneously, and the precise ordering of these steps is immaterial.

In one particular embodiment, the call charge rate derived by the WLAN operator from the charging call set up in the cellular communication system corresponds to the desired earning rate for the WLAN operator. In this situation, it is not necessary to provide separate call duration timer 182 and access counter 183 since the billing controller 181 need only to ensure that the cellular call lasts as long as the WLAN access session.

More generally, however, the WLAN operator will set a tariff allowing a fixed time period or fixed data transfer amount for a certain charge. Thus, the call duration timer 182 is set to count the time necessary for the WLAN operator to recover the desired charge from the call charge rate derived by the WLAN operator from the charging call set up in the cellular communication system. The access counter 183 is set to measure the data transferred or to count the access time. The access counter 183 may be additionally coupled to the WLAN/network interface 187 and/or the network access controller 186 if the access counter 183 is set to measure the data transferred.

In the illustrated embodiment tariff is based on an access time charge and the time necessary for the WLAN operator to recover the desired charge from the call charge rate derived by the WLAN operator from the charging call set up in the cellular communication system is less than the allowed access time. So referring once again to Figure 2, the call duration timer 182 expires at step 550 and the billing controller 181 ends the charging call by causing the communication system interface 185 to send base station 220 and end call message 560. Again, the precise signaling will depend on the protocols of the communication system 200 which will be known to a skilled person. At this point, the WLAN operator has received the charge for use of the WLAN network.

In this embodiment, the tariff selected is based on duration of access, and the WLAN user device is able to access network 300 via the WLAN until the access counter 183 expires at 570.

At this point, in the simplest embodiment, the billing controller 181 informs the information network access controller 186 that access is no longer permitted, and the network access controller 186 controls the WLAN/network interface 187 to prevent further access by the WLAN user device 150 to the network 300.

In the illustrated embodiment, however, once the originally paid for access has expired, the billing controller 181 sends a continuation enquiry message 580 to the WLAN user device 150 asking whether more access is required, and the WLAN user device responds with a positive continuation message 590, indicating that further WLAN access is desired. On receipt of a positive continuation message 570, events 440-570 as described above are repeated, shown in Figure 2 as additional events 600-730. As events 600-730 are the same as events 440-570 described above, no further explanation will be made.

Once the additional paid for access has expired in step 730, the billing controller 181 sends a continuation enquiry message 740 to the WLAN user device 150 asking whether more access is required. If either the WLAN user device responds with a negative continuation message 750 as shown, or alternatively a timeout occurs, the billing controller 181 determines that no further access is required by the WLAN user device, step 760, and returns to waiting for receipt of a request service message, as described above.

In other embodiments of the invention, the WLAN operator may provide a number of different tariffs for selection by the user, based on different combinations of flat connection charge and/or time-based charge and/or data transfer charge, for example, thus providing the user with choice, and enabling WLAN operators to differentiate their service from competing WLAN providers. The different tariffs may be selected by the user via information included in the request service message 430 and/or by providing different request service messages for each of the available tariffs, or by means of additional negotiation or signaling, as will be apparent to a skilled person.

In some embodiments, a plurality of different charging numbers to which charging calls are made may be provided. The different numbers can be set up to yield different charging rates for the WLAN operator. One possibility is for different charging numbers to be allocated to different tariffs, so that the higher charging tariffs are associated with higher yielding charging numbers. This allows the call duration on the cellular communication system 200 necessary to recover the WLAN charges to be minimized for all WLAN accesses, irrespective of the tariff being used, thus reducing congestion on the cellular communication system.

In embodiments where a plurality of different charging numbers are provided, for any particular call, the billing controller and/or the calling number selector 184 select the appropriate charging number and a charging call is set up to the selected charging number for the required duration to generate the desired charge for the WLAN operator.

Thus, as described herein, the WLAN operator causes a charging call to be made via another communication system using user subscriber information acceptable to the other communication system to a charging number from which the WLAN operator derives a proportion of the call cost. Thus the WLAN operator may control access to WLAN services and may charge for the WLAN access without having to implement a dedicated WLAN billing system.

The illustrated embodiment above has been described above with reference to a cellular communication system and a SIM card. However, other embodiments are envisaged in which other communication systems are used to set up the charging call: in particular a fixed line charging call may be used in some arrangements. In addition, although a SIM card is used in the described embodiment, in fact any means of storing subscriber information that is acceptable to the second communication system and can be processed by the other communication system can be used. For example a reverse charge calling card may be used in a fixed line system to provide the benefits of the invention.

Although, as described with regard to the illustrated embodiment the call to the other communication is made using subscription information for the other system, in principle it is not necessary to hold a subscription for communication services to the other communication system. All that is necessary is that the subscription information held by the WLAN-enabled communication device is in a form that is accepted by the other communication system and can be processed by the other communication system billing system.

Furthermore, although in the described embodiment access to the subscription information required to set up the charging call is provided by forwarding the authentication request and the authentication response, other possibilities for accessing the second communication system using the subscription information may be used. For example, the WLAN system may store second communication system subscription information for WLAN users, or may obtain such information in a separate process, prior to acting as a proxy using the subscription information directly to access the second communication system to set up the charging call.

Thus the present invention relates to a method and apparatus for enabling access in a WLAN environment, and in particular the present invention relates to allowing access to WLAN services in a manner that facilitates easy billing for the WLAN services.

In response to a WLAN access request, a charging call is set up in a second communication system using second communication system subscription information. The charging call is made to a number that provides for a proportion of the cost of the call to be allocated to the WLAN operator. Thus the WLAN operator is able to receive revenue for providing access to the WLAN via the charging call, which is billed for via the second communication system biling system. Thus, it is not necessary for the WLAN operator to operate a separate billing system.

## Claims

1. Method for enabling access to a WLAN communication system (100) comprising:
receiving (430) a WLAN access request from a WLAN communication device (150);
sending (440) an access request for subscription information back to the WLAN communication device;
initiating (450) a charging call using a second communication system by sending an access request message in a standard protocol for the second communication system;
receiving (460) a first authentication request from the second communication system;
forwarding (470) a second authentication request to the WLAN communication device using the information received from the second communication system;
receiving (480) a first authentication response from the WLAN communication device;
forwarding (490) a second authentication response information received from the WLAN communication device to the second communication system, **characterized in that the method further comprises:**
setting up the charging call, intiated in the intiating step (450), via the second communication system in response to the WLAN access request using second communication system subscription information associated with the WLAN communication device (150), wherein the charging call enables a proportion of the cost of the call as billed to the user via the subscriber information to be allocated to a party other than the provider of the communication system resource, i.e. to the WLAN operator; and
enabling access to the WLAN communication system (100) in response to the setting up of the charging call.

2. The method as claimed in claim 1 wherein the step of sending (440) is performed in parallel with the step of initiating (450) and before the step of receiving (460) an authentication request by the second communication system, such that the forwarding (490) response step is accomplished before a timeout of the authentication process by the second communication system.

3. The method as claimed in any preceding claim, also comprising the step of selecting the destination of the charging call depending on the requested service to be accessed.

4. The method as claimed in any preceding claim, also comprising the step of selecting (520) the duration of the charging call depending on the requested service to be accessed.

5. The method as claimed in any preceding claim wherein the charging call is a premium rate call.

6. The method as claimed in any preceding claim, also comprising the step of determining the duration of the charging call and the step of discontinuing (560) the charging call when the predetermined duration has expired.

7. The method as claimed in any preceding claim, also comprising the step of determining the duration of the permitted WLAN access, and the step of discontinuing (560) access once the allowed duration has expired.

8. The method as claimed in any preceding claim, also comprising the step of determining magnitude of permitted data transfer during WLAN access and the step of discontinuing access once permitted data transfer has occurred.

9. The method as claimed in any preceding claim, also comprising the step of initiating a new charging call in respect of additional access in response (590) to a request for additional access received from the WLAN device.

10. The method as claimed in claim 1, also comprising the step of providing subscription authentication information, to enable a charging call for the WLAN access to be set up in the second communication system using the subscription authentication information.

11. Apparatus for enabling access to a WLAN communication system (100) comprising:
means (181) for receiving (430) a WLAN access request from a WLAN communication device (150);
means (181) for sending (440) an access request for subscription information back to the WLAN communication device (150);
means (181) for initiating (450) a charging call using a second communication system (200) by sending an access request message in a standard protocol for the second communication system;
means (181) for receiving (460) a first authentication request from the second communication system (200);
means (181) for forwarding (470) a second authentication request to the WLAN communication device (150) using the information received from the second communication system (200);
means (180,181) for receiving (480) a first authentication response from the WLAN communication device (150);
means (181) for forwarding (490) a second authentication response information received from the WLAN communication device to the second communication system, **characterized in the apparatus further comprising:**
means (180) for setting up the charging call, initiated by the means (181) for initiating (450) a charging call, via the second communication system in response to the WLAN access request using second communication system subscription information associated with the WLAN communication device (150), wherein the charging call enables a proportion of the cost of the call as billed to the user via the subscriber information to be allocated to a party other than the provider of the communication system resource, i.e to the WLAN operator; and
means for enabling access to the WLAN communication system (100) in response to the setting up of the charging call.

## Patentansprüche

1. Verfahren zum Freigeben eines Zugriffs auf ein WLAN-Kommunikationssystem (100), das umfasst:
Empfangen (430) einer WLAN-Zugriffsanforderung von einer WLAN-Kommunikationsvorrichtung (150);
Senden (440) einer Zugriffsanforderung für Abonnementinformationen zurück zu der WLAN-Kommunikationsvorrichtung;
Initiieren (450) eines Abrechnungsanrufs unter Verwendung eines zweiten Kommunikationssystems durch Senden einer Zugriffsanforderungsnachricht in einem Standardprotokoll für das zweite Kommunikationssystem;
Empfangen (460) einer ersten Authentifizierungsanforderung von dem zweiten Kommunikationssystem;
Weiterleiten (470) einer zweiten Authentifizierungsanforderung an die WLAN-Kommunikationsvorrichtung unter Verwendung der von dem zweiten Kommunikationssystem empfangenen Informationen;
Empfangen (480) einer ersten Authentifizierungsantwort von der WLAN-Kommunikationsvorrichtung;
Weiterleiten (490) einer zweiten Authentifizierungsantwortinformation, die von der WLAN-Kommunikationsvorrichtung in dem zweiten Kommunikationssystem empfangen wird, **dadurch gekennzeichnet, dass** das Verfahren weiterhin umfasst:
Aufbauen des in dem Initiierungsschritt (450) initiierten Abrechnungsanrufs über das zweite Kommunikationssystem in Reaktion auf die WLAN-Zugriffsanforderung unter Verwendung von Abonnementinformationen eines zweiten Kommunikationssystems, die mit der WLAN-Kommunikationsvorrichtung (150) verknüpft sind, wobei der Abrechnungsanruf einen Teil der Kosten des Anrufs dem Anwender über die Teilnehmerinformationen als in Rechnung gestellt freigibt, die einer anderen Partei als dem Anbieter der Kommunikationssystemsressource, das heißt dem WLAN-Betreiber, zuzuordnen sind; und
Freigeben eines Zugriffs auf das WLAN-Kommunikationssystem (100) in Reaktion auf das Aufbauen des Abrechnungsanrufs.

2. Verfahren gemäß Anspruch 1, wobei der Schritt des Sendens (440) parallel zu dem Schritt des Initiierens (450) und vor dem Schritt des Empfangens (460) einer Authentifizierungsanforderung durch das zweite Kommunikationssystem durchgeführt wird, so dass der Weiterleitungs(490)-Antwortschritt vor einem Zeitlimit des Authentifizierungsprozesses durch das zweite Kommunikationssystem abgeschlossen ist.

3. Verfahren gemäß einem der vorangehenden Ansprüche, das außerdem umfasst: den Schritt eines Auswählens des Ziels des Abrechnungsanrufs in Abhängigkeit von dem angeforderten Dienst, auf den zugegriffen werden soll.

4. Verfahren gemäß einem der vorangehenden Ansprüche, das außerdem umfasst: den Schritt eines Auswählens (520) der Dauer des Abrechnungsanrufes in Abhängigkeit von dem angeforderten Dienst, auf den zugegriffen werden soll.

5. Verfahren gemäß einem der vorangehenden Ansprüche, wobei der Abrechnungsanruf ein Tarifbeitragsanruf ist.

6. Verfahren gemäß einem der vorangehenden Ansprüche, das außerdem umfasst: den Schritt eines Bestimmens der Dauer des Abrechnungsanrufs und den Schritt eines Abbrechens (560) des Abrechnungsanrufs, wenn die vorbestimmte Dauer abgelaufen ist.

7. Verfahren gemäß einem der vorangehenden Ansprüche, das außerdem umfasst: den Schritt eines Bestimmens der Dauer des erlaubten WLAN-Zugriffs und den Schritt eines Abbrechens (560) eines Zugriffs nachdem die gewährte Dauer abgelaufen ist.

8. Verfahren gemäß einem der vorangehenden Ansprüche, das außerdem umfasst: den Schritt eines Bestimmens eines Umfangs einer gewährten Datenübertragung während eines WLAN-Zugriffs und den Schritt eines Abbrechens eines Zugriffs, nachdem eine gewährte Datenübertragung stattgefunden hat.

9. Verfahren gemäß einem der vorangehenden Ansprüche, das außerdem umfasst: den Schritt eines Initiierens eines neuen Abrechnungsanrufs hinsichtlich eines zusätzlichen Zugriffs in Reaktion (590) auf eine von der WLAN-Vorrichtung empfangene Anforderung für einen zusätzlichen Zugriff.

10. Verfahren gemäß Anspruch 1, das außerdem umfasst: den Schritt eines Bereitstellens von Abonnementauthentifizierungsinformationen, um zu ermöglichen, dass ein Abrechnungsanruf für den WLAN-Zugriff in dem zweiten Kommunikationssystem unter Verwendung der Abonnementauthentifizierungsinformationen aufgebaut werden kann.

11. Vorrichtung zum Freigeben eines Zugriffs auf ein WLAN-Kommunikationssystem (100), das umfasst:
Mittel (181) zum Empfangen (430) einer WLAN-Zugriffsanforderung von einer WLAN-Kommunikationsvorrichtung (150);
Mittel (181) zum Senden (440) einer Zugriffsanforderung für Abonnementinformationen zurück zu der WLAN-Kommunikationsvorrichtung (150);
Mittel (181) zum Initiieren (450) eines Abrechnungsanrufs unter Verwendung eines zweiten Kommunikationssystems (200) durch Senden einer Zugriffsanforderungsnachricht in einem Standardprotokoll für das zweite Kommunikationssystem;
Mittel (181) zum Empfangen (460) einer ersten Authentifizierungsanforderung von dem zweiten Kommunikationssystem (200);
Mittel (181) zum Weiterleiten (470) einer zweiten Authentifizierungsanforderung an die WLAN-Kommunikationsvorrichtung (150) unter Verwendung der von dem zweiten Kommunikationssystem (200) empfangenen Informationen;
Mittel (180, 181) zum Empfangen (480) einer ersten Authentifizierungsantwort von der WLAN-Kommunikationsvorrichtung (150);
Mittel (181) Weiterleiten (490) einer zweiten Authentifizierungsantwortinformation, die von der WLAN-Kommunikationsvorrichtung in dem zweiten Kommunikationssystem empfangen wird, **dadurch gekennzeichnet, dass** die Vorrichtung weiterhin umfasst:
Mittel (180) zum Aufbauen des durch das Mittel (181) zum Initiieren (450) eines Abrechnungsanrufs initiierten Abrechnungsanrufs über das zweite Kommunikationssystem in Reaktion auf die WLAN-Zugriffsanforderung unter Verwendung von Abonnementinformationen eines zweiten Kommunikationssystems, die mit der WLAN-Kommunikationsvorrichtung (150) verknüpft sind, wobei der Abrechnungsanruf einen Teil der Kosten des Anrufs dem Anwender über die Teilnehmerinformationen als in Rechnung gestellt freigibt, die einer anderen Partei als dem Anbieter der Kommunikationssystemsressource, das heißt dem WLAN-Betreiber, zuzuordnen sind; und
Mittel zum Freigeben eines Zugriffs auf das WLAN-Kommunikationssystem (100) in Reaktion auf das Aufbauen des Abrechnungsanrufs.

## Revendications

1. Procédé pour autoriser un accès à un système de communication WLAN (100), comprenant :
la réception (430) d'une demande d'accès WLAN en provenance d'un dispositif de communication WLAN (150) ;
l'envoi en retour (440) d'une demande d'accès à des informations d'abonnement au dispositif de communication WLAN ;
le démarrage (450) d'une communication à imputation au moyen d'un deuxième système de communication, par envoi d'un message de demande d'accès dans un protocole standard pour le deuxième système de communication ;
la réception (460) d'une première demande d'authentification en provenance du deuxième système de communication ;
la transmission (470) d'une deuxième demande d'authentification au dispositif de communication WLAN, au moyen des informations reçues en provenance du deuxième système de communication ;
la réception (480) d'une première réponse d'authentification en provenance du dispositif de communication WLAN ;
la transmission (490) au deuxième système de communication de deuxièmes informations de réponse d'authentification reçues du dispositif de communication WLAN, **caractérisé en ce que** le procédé comprend, en outre :
l'établissement de la communication à imputation, démarrée à l'étape de démarrage (450), via le deuxième système de communication en réponse à la demande d'accès WLAN au moyen d'informations d'abonnement au deuxième système de communication associées au dispositif de communication WLAN (150), où la communication à imputation permet qu'une proportion du coût de la communication facturé à l'utilisateur via les informations d'abonné soit allouée à un tiers autre que le fournisseur de la ressource de système de communication, à savoir à l'opérateur WLAN ; et
l'autorisation d'accès au système de communication WLAN (100) en réponse à l'établissement de la communication à imputation.

2. Procédé selon la revendication 1, dans lequel l'étape d'envoi (440) est exécutée en parallèle à l'étape de démarrage (450) et avant l'étape de réception (460) d'une demande d'authentification par le deuxième système de communication, de sorte que l'étape de transmission de réponse (490) est accomplie avant une interruption du processus d'authentification par le deuxième système de communication.

3. Procédé selon l'une quelconque des revendications précédentes, comprenant également l'étape de sélection de la destination de la communication à imputation en fonction du service auquel l'accès est demandé.

4. Procédé selon l'une quelconque des revendications précédentes, comprenant également l'étape de sélection (520) de la durée de la communication à imputation en fonction du service auquel l'accès est demandé.

5. Procédé selon l'une quelconque des revendications précédentes, dans lequel la communication à imputation est une communication du type service de kiosque.

6. Procédé selon l'une quelconque des revendications précédentes, comprenant également l'étape de détermination de la communication à imputation et l'étape de coupure (560) de la communication à imputation lorsque la durée prédéterminée a expiré.

7. Procédé selon l'une quelconque des revendications précédentes, comprenant également l'étape de détermination de la durée de l'accès WLAN autorisé, et l'étape de coupure (560) de l'accès une fois que la durée autorisée a expiré.

8. Procédé selon l'une quelconque des revendications précédentes, comprenant également l'étape de détermination du volume de transfert de données autorisé pendant un accès WLAN et l'étape de coupure d'accès une fois que le transfert de données autorisé a été effectué.

9. Procédé selon l'une quelconque des revendications précédentes, comprenant également l'étape de démarrage d'une nouvelle communication à imputation concernant un accès additionnel en réponse (590) à une demande d'accès additionnel reçue en provenance du dispositif WLAN.

10. Procédé selon la revendication 1, comprenant également l'étape de fourniture d'informations d'authentification d'abonnement pour permettre l'établissement d'une communication à imputation pour l'accès WLAN dans le deuxième système de communication, au moyen des informations d'authentification d'abonnement.

11. Appareil pour autoriser un accès à un système de communication WLAN (100), comprenant :
des moyens (181) pour la réception (430) d'une demande d'accès WLAN en provenance d'un dispositif de communication WLAN (150) ;
des moyens (181) pour l'envoi en retour (440) d'une demande d'accès à des informations d'abonnement au dispositif de communication WLAN;
des moyens (181) pour le démarrage (450) d'une communication à imputation au moyen d'un deuxième système de communication (200), par envoi d'un message de demande d'accès dans un protocole standard pour le deuxième système de communication ;
des moyens (181) pour la réception (460) d'une première demande d'authentification en provenance du deuxième système de communication (200) ;
des moyens (181) pour la transmission (470) d'une deuxième demande d'authentification au dispositif de communication WLAN (150), au moyen des informations reçues en provenance du deuxième système de communication (200) ;
des moyens (180, 181) pour la réception (480) d'une première réponse d'authentification en provenance du dispositif de communication WLAN (150) ;
des moyens (181) pour la transmission (490) au deuxième système de communication de deuxièmes informations de réponse d'authentification reçues du dispositif de communication WLAN, **caractérisé en ce que** l'appareil comprend, en outre :
des moyens (180) pour l'établissement de la communication à imputation, démarrée par les moyens (181) pour le démarrage (450) d'une communication à imputation, via le deuxième système de communication en réponse à la demande d'accès WLAN au moyen d'informations d'abonnement au deuxième système de communication associées au dispositif de communication WLAN (150), où la communication à imputation permet qu'une proportion du coût de la communication facturé à l'utilisateur via les informations d'abonné soit allouée à un tiers autre que le fournisseur de la ressource de système de communication, à savoir à l'opérateur WLAN ; et
des moyens pour l'autorisation d'accès au système de communication WLAN (100) en réponse à l'établissement de la communication à imputation.
